(19) Europäisches Patentamt
European Patent Office
Office européen des brevets

(11) EP 0 661 178 B1

(12) **EUROPEAN PATENT SPECIFICATION**

(45) Date of publication and mention of the grant of the patent:
**30.07.1997 Bulletin 1997/31**

(51) Int. Cl.$^6$: **B60C 9/20**, B60C 19/00, B60C 11/03

(21) Application number: **94309584.4**

(22) Date of filing: **20.12.1994**

(54) **Pneumatic tyres and arrangement thereof on vehicles**

Luftreifen und ihre Anordnung bei Fahrzeugen

Bandages pneumatiques et position de ceux-ci sur des véhicules

(84) Designated Contracting States:
**DE FR GB IT**

(30) Priority: **28.12.1993 JP 338455/93**

(43) Date of publication of application:
**05.07.1995 Bulletin 1995/27**

(73) Proprietor: **Sumitomo Rubber Industries Ltd.**
**Kobe-shi, Hyogo-ken (JP)**

(72) Inventor: **Shibata, Koji**
**Nishinomiya-shi, Hyogo (JP)**

(74) Representative: **Stewart, Charles Geoffrey**
**SP TYRES UK LIMITED**
**Technical Division**
**Fort Dunlop, Erdington, Birmingham B24 9QT (GB)**

(56) References cited:

| | |
|---|---|
| EP-A- 0 321 384 | EP-A- 0 402 595 |
| EP-A- 0 428 472 | DE-A- 3 612 886 |
| FR-A- 794 233 | FR-A- 1 473 029 |

- **PATENT ABSTRACTS OF JAPAN vol. 12 no. 282 (M-726) [3129] ,3 August 1988 & JP-A-63 061605 (YOKOHAMA RUBBER CO. LTD.) 17 March 1988,**
- **DATABASE WPI Week 9444 Derwent Publications Ltd., London, GB; AN 94-354347 & JP-A-06 278 409 (BRIDGESTONE CORP.) , 4 October 1994**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 661 178 B1

Printed by Rank Xerox (UK) Business Services
2.14.11/3.4

## Description

The present invention relates to pneumatic tyres and an arrangement of pneumatic tyres on a vehicle.

A pneumatic tyre is required to have stable cornering performance (danger avoiding performance) to ensure satisfactory manoeuvrability of the vehicle. Tyre characteristics including an ability to give appropriate resistance to steering action for a minute steering angle and an ability to secure stability of the vehicle when the vehicle changes lane must be improved to enhance the manoeuvrability of the vehicle, which can be achieved by enhancing the cornering force or cornering power of the pneumatic tyres (see "A Guide to Tire Engineering," Grand Prix K.K., July 5, 1989, pp 90-99).

A technique to enhance the cornering force of a pneumatic tyre is disclosed in, for example, Examined Japanese Patent Publication No Hei 4-45394.

This prior art relates to the arrangement of pneumatic radial tyres on a vehicle. According to this known technique, each of the pneumatic radial tyres on the right wheels in the forward direction has an outermost belt ply having its cords extending diagonally to the lower left hand in the forward or advancing direction, and each of the pneumatic radial tyres on the left wheels in the forward direction has an outermost belt ply having its cords extending diagonally to the lower right hand in the forward or advancing direction.

In a vehicle with radial tyres arranged in the above-mentioned manner, centrifugal force acts on the pneumatic radial tyres perpendicularly to the direction of the cords of the outermost belt plies, increasing the resistance of the treads of the pneumatic radial tyres against centrifugal force and, consequently, the cornering force of the pneumatic radial tyres increases and the manoeuvrability of the vehicle at small steering angles is improved.

Because of the front and rear wheels having their tyres with the above-mentioned arrangements, however the result is that the cornering power is increased excessively which increases the yaw rate of the vehicle for steering angle during high-speed travelling and, consequently, the behaviour of the vehicle becomes hypersensitive to steering, which, far from improving manoeuvrability, makes the driver uneasy.

This is because the ratio, (Steering force)/Yaw rate) decreases as the cornering power increases, which reduces the resistance to steering action and increases the burden on the driver.

Yaw rate is equivalent to yaw velocity, namely, the speed of change of yaw angle, i.e. angle of rotation of the vehicle about a vertical axis passing the centre of gravity of the vehicle. High yaw rate means a high angular speed of yawing in response to steering, namely, highly sensitive change of travelling direction of the vehicle.

The cornering power must be enhanced to improve the manoeuvrability of the vehicle, whereas the cornering power must be reduced so that the (Steering force)/(Yaw rate) is increased to enhance the stability of the vehicle. Thus, these two contradictory conditions must be satisfied to secure both satisfactory manoeuvrability and satisfactory stability.

Accordingly it is an object of the present invention to provide pneumatic tyres and an arrangement of the pneumatic tyres on a vehicle, capable of enhancing both the cornering power and the ratio (Steering force)/(Yaw rate).

Accordingly, one aspect of the present invention provides an arrangement of pneumatic tyres on a vehicles characterised in that the pneumatic tyres mounted on the right front wheel and the left rear wheel in the advancing or forward direction of the vehicle have an outermost belt ply under the tread in which cords extend diagonally to the lower right hand in the advancing direction of the vehicle, and pneumatic tyres mounted on the left front wheel and the right rear wheel in the forward or advancing direction of the vehicle have an outermost belt ply under the tread in which the cords extend diagonally to the lower left hand in the advancing direction of the vehicle.

The present invention has been made on the basis of the fact that the dependence of cornering power on load varies with the direction of inclination of the cords of the outermost belt of pneumatic tyres and the aforesaid two contradictory conditions compromise with each other when the pneumatic tyres are arranged on a vehicle in a specific arrangement.

Cornering power varies with load as shown in Figure 3 when the cords of the outermost belt ply underneath the tread of the tyre extend diagonally to the lower right hand in the advancing direction as shown in Figure 2.

Cornering power varies with load as shown in Figure 5 when the cords of the outermost belt underneath of the tread of the tyre extend diagonally to the lower left hand as shown in Figure 4.

As is obvious from Figures 3 and 5, the cornering power is dependent on the load and increases with the increase of the load.

Incidentally, the loads on the front wheel and the rear wheel of a vehicle are different and hence the respective cornering powers of the front wheel and the rear wheel are different.

Therefore, the overall cornering power, i.e. the sum of the respective cornering powers of the pneumatic tyres, can be maintained at a high level to ensure the manoeuvrability of the vehicle and to increase (Steering force)/(Yaw rate) by raising the minimum cornering power of each wheel and lowering the maximum cornering power of the same, namely, averaging the variation of the cornering power of each wheel.

In a vehicle in which the load on the front wheel is greater than that on the rear wheel, such as a front-engine vehicle, the cornering power of the front wheel is higher than that of the rear wheel and hence the vehicle has an oversteering characteristic.

The balance of the respective cornering powers of the front wheel and the rear wheel in a range where slip angle is as small as about 1° is called "load sensitivity". Load sensitivity is the ratio of (cornering power of the front wheel) - (cornering power of the rear wheel) to (load on the front wheel). When the load sensitivity is high, a vehicle tends to oversteer, whereas when the load sensitivity is lower, a vehicle tends to understeer.

Refer to oversteering and understeering in "A Guide to Tire Engineering", pp 155-156.

If load sensitivity is lowered by increasing the cornering power of the rear wheel relative to that of the front wheel, (Steering force)/)Yaw rate) increases; that is, the resistance of the turning of the vehicle against steering increases, a driver feels easy and the behaviour of the vehicle is gentle.

Thus stability of the vehicle is ensured whilst the absolute value of cornering power is increasing by improving the balance of cornering power.

Thus in the invention, pneumatic tyres on a vehicle are arranged as shown in Figure 1. When the vehicle turns to the left, where the right front wheel and the right rear wheel are exposed to severe load conditions, the respective cornering powers of the right front wheel and the right rear wheel vary with load as shown in Figure 6. As is obvious from Figure 6, the respective minimum cornering powers of the right front wheel and the right rear wheel are raised and the respective maximum cornering powers of the same are lowered to maintain a high overall cornering power and also ensuring satisfactory manoeuvrability of the vehicle. Since the maximum cornering powers of the right front wheel and the right rear wheel are lowered, problems attributable to excessive response to the movement of the vehicle to steering, i.e. an excessive oversteering tendency, are solved, and so the stability of the vehicle is improved. Furthermore, since the sum of the respective cornering powers of the right and the left wheels is the same for both right cornering and left cornering, the right cornering performance and the left cornering performance of the vehicle are the same, so that the stability of the vehicle during turning is improved.

The present invention is also effectively applicable to a vehicle in which the load on the front wheel is equal to that on the rear wheel or the load on the rear wheel is greater than that on the front wheel, such as a mid-engine vehicle or a rear-engine vehicle. Such a vehicle is steered for cornering or changing lane with the brake applied to avoid danger, the load distribution on the front wheels increases to increase the cornering powers of the front wheels. Consequently, the vehicle tends to oversteer and the yaw rate of the vehicle increases excessively relative to steering angle, which is dangerous.

However, with the present invention, the cornering power of the front wheels is reduced and hence the oversteering tendency of the vehicle is suppressed when the vehicle is cornered to avoid danger. The behaviour of the vehicle during a danger avoiding operation is the most sensitive manoeuvring operation, and the behavioural characteristics of the vehicle are the most important to ensure safe travelling. As a result of the present invention, since the sum of the respective cornering powers of the front wheels and the rear wheels is the same for both right cornering and left cornering, the right-cornering performance and the left-cornering performance of the vehicle are the same, which improves safety during cornering.

Accordingly a second aspect of the present invention provides a pneumatic tyre having an outermost belt ply of reinforcement cords extending diagonally across the tyre under the tread, the tread having a tread pattern such that, when the tyre is mounted on a measuring rim to JATMA Standards, inflated to the standard pressure and loaded to 88% of maximum load then the tread pattern is characterised by a sea ratio S which is equal to or greater than 25% and equal to or less than 40% ($25\% \leq S \leq 40\%$) and a greater sea ratio Ssh which is the sea ratio at a quarter width of the tread from the outside of the tyre when mounted on a vehicle which is 10% or more and 25% or less ($10\% \leq Ssh \leq 25\%$).

Since the pattern of the tread on the outer side, on which a high load acts when the vehicle turns, meeting such specified conditions has a high rigidity due to the low sea ratio, both cornering power levels of the front wheel and the rear wheel can be raised, variation of cornering power with load is reduced or flattened and the cornering power is enhanced.

If the Sea ratio Ssh of the tread pattern on the outer side of the pneumatic tyre as mounted on a vehicle is less than 10% the cornering power increases more but hydroplaning occurs particularly during turning. If the Sea ratio is increased beyond the specified range than the cornering power decreases below an acceptable level.

Also an increase of the Sea ratio Ssh beyond 25% is not effective in increasing cornering power.

If the Sea ratio S of the entire tread is less than 25%, both linear hydroplaning and lateral hydroplaning are liable to occur readily and such a pneumatic tyre cannot be used. If the Sea ratio S of the entire tread is greater than 40%, the difference in rigidity between the shoulder and the tread is too large, and the pneumatic tyre is subject to uneven or partial wear, the overall rigidity of the tread pattern is reduced and cornering power is reduced.

Preferably, the tread pattern of the pneumatic tyre is asymmetric with respect to the equatorial plane.

The pneumatic tyres and the arrangement of the pneumatic tyres on a vehicle in accordance with the present invention improve the stability of the vehicle in straight travelling and prevent partial or uneven wear of the pneumatic tyres. Since the area of the grooves in the crown of the pneumatic tyre is greater than that of the grooves in the shoulder when the tread pattern is symmetric with respect of the equatorial plane, the rigidity of the crown is lower than that of the shoulder, the cornering force of the self-aligning torque of the crown to which a high contact pressure acts during straight travelling is reduced to affect the stability of the vehicle in straight travelling adversely and, in the worst case, to cause the partial or uneven wear of the tread.

These problems can be solved by using pneumatic tyres each having an asymmetric tread pattern.

The present invention is applicable not only to vehicles provided with front wheels and rear wheels which are the same in size, but also applicable to vehicles provided with front wheels and rear wheels which are different in size.

Embodiments of the present invention will now be described, by way of example only, in conjunction with the attached diagrammatic drawings in which:

Figure 1 is a plan view of pneumatic tyres arranged on a vehicle according to the present invention;
Figure 2 shows the slanting direction of the cords of the belt ply;
Figure 3 is a graph showing the variation of the cornering power of the pneumatic tyre having a belt in which the cords extend as shown in Figure 2 with load;
Figure 4 shows the slanting direction of the cords of the belt ply of a second pneumatic tyre;
Figure 5 is a graph showing the variation of the cornering power of the pneumatic tyre having a belt in which the cords extend as shown in Figure 4 with load;
Figure 6 is a graph showing the variation of the cornering powers of the front wheel and the read wheel arranged in an arrangement as shown in Figure 1 with load;
Figure 7 is a sectional view of a pneumatic tyre in a preferred embodiment according to the present invention;
Figure 8 is a development of an asymmetric tread pattern;
Figure 9 is a development of a conventional tread pattern; and
Figure 10 is a development of a symmetric tread pattern.

Referring to Figure 7, a pneumatic radial tyre 1 in accordance with the present invention comprises a pair of tyre beads 2, a carcass 3 mounted between the tyre beads 2, upper and lower belt plies 4,5 arranged in a manner to cover the outer periphery of the carcass, a tread cap 6 covering the outer periphery of the belt plies 4 and 5, and sidewalls 8 mounted between shoulders 7 on the opposite sides of the tread cap 6 and the corresponding tyre beads 2.

Cords 4a forming the upper belt ply 4 and cords 5a forming the lower belt ply 5 are transverse respectively (see Figures 2 and 4).

As shown in Figure 8, the tread 6 of the pneumatic radial tyre 1 has a tread pattern whose pattern is asymmetric with respect to the equatorial plane 9 on the pneumatic radial tyre 1.

In the above-mentioned tread pattern, when the tyre is mounted on a measuring rim to JATMA Standards, inflated to the specified inner pressure and in a standard state loaded with 88% of maximum load then the Sea ratio S of the tread is such that $25\% \leq S \leq 40\%$ and the Sea ratio Ssh at the quarter width W of the tread from the outer sides when mounted on a vehicle is such that $10\% \leq Ssh \leq 25\%$.

The Sea ratio S if the ratio of the total area of the grooves to the apparent contact area, and the apparent contact area is the total area of the region surrounded by the outline of the contact area when the tread of the pneumatic tyre in the standard state is in contact with a plane.

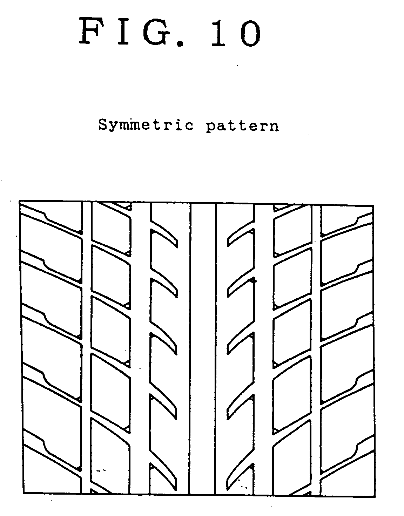

According to the present invention the tread pattern can be a prior art tread pattern shown in Figure 9 or a symmetric tread pattern as shown in Figure 10.

Figure 1 is a plan view of four pneumatic radial tyres 1 arranged on a vehicle 10. The tyres 1 mounted on the right front wheel 11a and the left rear wheel 12b in the advancing or forward direction of the vehicle have their outer belt plies 4 under the tread with their reinforcement cords extend diagonally to the lower right hand in the advancing direction. The radial tyres 1 mounted on the left front wheel 11b and the right rear wheel 12a in the forward or advancing direction of the vehicle have their outer belt plies 4 under the tread with their reinforcement cords extending diagonally to the lower left hand in the advancing direction.

The following Tables show the performance characteristics of preferred embodiments of the present invention, and examples of the prior art and comparative examples.

TABLE 1

| | | Conventional pneumatic tyre | First embodiment |
|---|---|---|---|
| a | S | 33% | 33% |
| | sM | 33% | 18% |
| b | | q | r |
| c | | 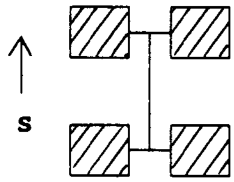 | 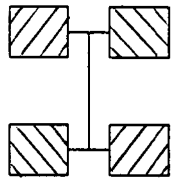 |
| d | e | 83 | 79 |
| | f | 50 | 51 |
| g | e | 72 | 79 |
| | f | 45 | 51 |
| h | i | $1.65 \times 10^{-1}$ | $1,40 \times 10^{-1}$ |
| | j | $1.35 \times 10^{-1}$ | $1.40 \times 10^{-1}$ |
| k | l | 100 | 100 |
| | m | 100 | 99 |
| n | o | 100 | 100 |
| | p | 102% | 97% |

a. SEA ratio
b. Type of tread pattern
c. Breaker fitting direction
d. CP (1) Right cornering
e. Front
f. Rear
g. CP (-1) Left cornering
h. Load sensitivity
i. +1 Right cornering
j. -1 Left cornering
k. Resistance to hydroplaning
l. Longitudinal
m. Transverse
n. Abrasion test
o. Abrasion amount (Index)
p. Abrasion ratio
q. Conventional tread pattern
r. Asymmetric tread pattern
s. Advancing direction

TABLE 2

| Second embodiment | Third embodiment | Comparative example 1 |
|---|---|---|
| 25% | 40% | 33% |
| 10% | 25% | 33% |
| ← | ← | q |
| 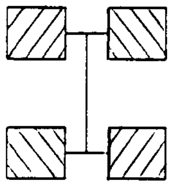 | 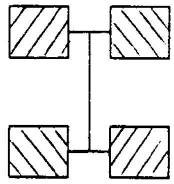 | 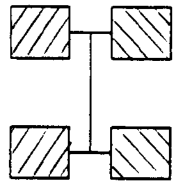 |
| 81 | 77 | 76 |
| 53 | 49.5 | 46.5 |
| 81 | 77 | 76 |
| 53 | 49.5 | 46.5 |
| 1.40 x $10^{-1}$ | 1.38 x $10^{-1}$ | 1.48 x $10^{-1}$ |
| 1.40 x $10^{-1}$ | 1,38 x $10^{-1}$ | 1.48 x $10^{-1}$ |
| 90 | 113 | 100 |
| 85 | 109 | 100 |
| 110 | 92 | 100 |
| 95% | 97% | 102% |

TABLE 3

| Comparative example 2 | Fourth embodiment | Fifth embodiment |
|---|---|---|
| 33 | 20 | 50 |
| 33% | 8 | 31 |
| ← | r | ← |
| 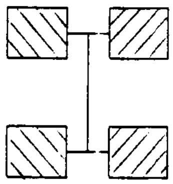 | 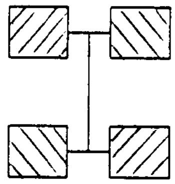 | 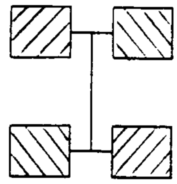 |
| 79 | 82 | 75 |
| 48.5 | 53.5 | 47 |
| 79 | 82 | 75 |
| 48.5 | 53.5 | 47 |
| $1.53 \times 10^{-1}$ | $1.43 \times 10^{-1}$ | $1.40 \times 10^{-1}$ |
| $1.53 \times 10^{-1}$ | $1.43 \times 10^{-1}$ | $1.40 \times 10^{-1}$ |
| 100 | 78% | 135 |
| 100 | 75% | 130 |
| 100 | 116% | 80 |
| 102% | 96% | 97% |

TABLE 4

| Sixth embodiment | Seventh embodiment | Eight embodiment |
|---|---|---|
| 33 | 33 | 33 |
| 33 | 8 | 33 |
| q | r | q |
| 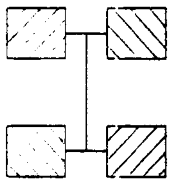 | 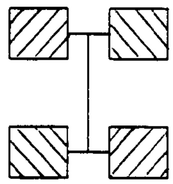 | 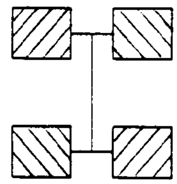 |
| 76 | 79 | 76 |
| 48.5 | 50 | 48.5 |
| 76 | 79 | 76 |
| 48.5 | 50 | 48.5 |
| $1.38 \times 10^{-1}$ | $1.45 \times 10^{-1}$ | $1.38 \times 10^{-1}$ |
| $1.38 \times 10^{-1}$ | $1.45 \times 10^{-1}$ | $1.38 \times 10^{-1}$ |
| 100 | 103 | 100 |
| 100 | 91 | 100 |
| 100 | 98 | 100 |
| 102% | 88% | 102% |

TABLE 5

| Ninth embodiment | Tenth embodiment |
|---|---|
| 33 | 33 |
| 8 | 18 |
| r | t |
| 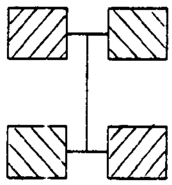 | 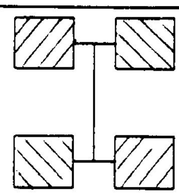 |
| 79 | 79 |
| 50 | 51 |
| 79 | 79 |
| 50 | 51 |
| $1.45 \times 10^{-1}$ | $1.40 \times 10^{-1}$ |
| $1.45 \times 10^{-1}$ | $1.40 \times 10^{-1}$ |
| 103 | 101 |
| 91 | 97 |
| 98 | 99 |
| 88% | 87% |

r. Asymmetric tread pattern
t. Symmetric tread pattern

The size of the test tyres shown in the Tables was 175/70R13, they had an inflation pressure of 2.0/2.0 and were mounted on rims of 13 x 5J. The vehicle used for testing the test tyres was a CAMRY, a front-engine front-drive automobile from the TOYOTA MOTOR CORPORATION with an engine of 1800cc in displacement.

The prior art tread pattern, asymmetric tread pattern and symmetric tread pattern are shown in Figures 9, 8 and 10 respectively.

The drawings in the item "Breaker fitting direction" indicate the slanting direction of the cords of the outer periphery of the belt plies of the test tyres as mounted on the test vehicle.

"CP" was the cornering power at a steering angle of 1° for right cornering and left cornering, each of the values for "Front wheel" is the mean of the respective cornering powers of the right and the left front wheel, and each of the values for "Rear wheel" is the mean of the respective cornering powers of the right and the left rear wheel. It is inferred that equal cornering forces are produced by tyres having a normal breaker fitting direction mounted on the vehicle when the steering angle is in a range of very small steering angles at which rolling will not cause a load to shift between the right wheel and the left wheel. However, the cornering force for right cornering and the cornering force for left cornering of the pneumatic tyre are different. When the pneumatic radial tyres are mounted on the vehicle in accordance with the present invention, where the pneumatic radial tyres of the right front wheel and the left front wheel are different in breaker fitting direction, and the pneumatic radial tyres of the right rear wheel and the left rear wheel are different in breaker fitting direction, the cornering force remains constant regardless of the direction of cornering, while the respective cornering forces of the right wheel and the left wheel are different from each other for the same cornering direction. Therefore the mean of the respective cornering forces of the right and the left front wheel, and the mean of the respective cornering forces of the right and the left rear wheel are used. Values calculated by the following formulas are in each blank for the right and left cornering.

Front CP = {(CP of outer tyre at 500kgf) + (CP of inner tyre at 300kgf)}/2

Rear CP = {(CP of outer tyre at 300kgf) + (CP of inner tyre at 100kgf)}/2

The definition of Load sensitivity is the same as the foregoing definition.

Values for "Hydroplaning" were calculated with the conventional tyres set at 100. Higher values mean better performance in hydroplaning prevention.

Values for "Longitudinal" were determined by evaluating the hydroplaning preventive performance of the test tyres, when the test vehicle travelled at 100km/h on an asphalt-paved road covered with water of 10mm in depth. Deceleration G was measured and hydroplaning preventive performance was evaluated by speed at G = 0.18g.

Values for "Transversal" were determined by evaluating the hydroplaning preventive performance of the test tyres on the basis of transverse G measured when the test vehicle was driven at progressively increasing travelling speed around a radius R = 100 and covered with water 5mm in depth.

Measuring values of transverse G determined in a range of travelling speed of 70 to 90km/h. These were averaged to obtain the mean G.

"Abrasion amount" was determined by using the abrasion amount of the conventional pneumatic radial tyre as the norm of 100. The greater indices indicate smaller abrasion amounts. "Abrasion ratio" is the ratio of the abrasion amount of the outer shoulder to that of the crown of the test tyre. When the test tyre is abraded uniformly, the abrasion ratio is 100%.

As is obvious from Tables 1 to 5, the right cornering power and the left cornering power of the convention pneumatic radial tyre is not uniform.

Comparative Example 1 had a right cornering force and a left cornering force, both of which were comparatively low, and Comparative Example 1 was inferior in stability.

Although Comparative Example 2 had a right cornering force and a Left cornering force, both of which were comparatively high, the response to steering action was excessively sensitive and liable to cause oversteering, and the Comparative Example 2 was inferior in grip of the rear wheels, stability and ability to make a driver feel easy.

In the embodiments of the present invention, the load sensitivity was reduced, the cornering power of the rear wheels was secured to increase (steering force)/(yaw rate) compared to that of the right wheels. Therefore, the behaviour of the vehicle responded properly to the steering operation, the vehicle behaved gently and driver felt at ease.

The stability of the vehicle can be secured by securing the absolute value of cornering power instead of securing the balance of cornering powers.

Although the cornering power increases when the Sea ratio Ssh at the quarter width W of the treads from the outside if the value is below 10%, hydroplaning during cornering increases. The resistance to hydroplaning then remained below a permissible level even when the Sea ratio of the other range was increased.

Sea ratios Ssh greater than 25% were ineffective in increasing the cornering power.

Longitudinal and transverse hydroplaning of the pneumatic tyres having treads with sea ratios S less than 25% were likely to occur and the pneumatic tyres could not be used. When the Sea ratio S was greater than 40%, the difference between the shoulder and the crown of the pneumatic tyre in rigidity was excessively large, the pneumatic tyre was worn partially, the pattern rigidity of the entire tread was reduced and the level of the cornering power was lowered.

The preferred embodiments described herein are illustrative and not restrictive, and many changes and modifications may be made therein without departing from the scope of the invention as set forth in the appended claims.

## Claims

1. An arrangement of pneumatic tyres (1) on a vehicle characterised in that the pneumatic tyres mounted on the right front wheel (11a) and the left rear wheel (12b) in the advancing or forward direction of the vehicle have an outermost belt ply (4) under the tread in which cords extend diagonally to the lower right hand in the advancing direction of the vehicle, and pneumatic tyres mounted on the left front wheel (11b) and the right rear wheel (12a) in the forward or advancing direction of the vehicle have an outermost belt ply (4) under the tread in which the cords extend diagonally to the lower left hand in the advancing direction of the vehicle.

2. A pneumatic tyre for the arrangement of claim 1, having an outermost belt ply (4) of reinforcement cords extending diagonally across the tyre under the tread, the tread having a tread pattern such that, when the tyre is mounted on a measuring rim to JATMA Standards, inflated to the standard pressure and loaded to 88% of maximum load then the tread pattern is characterised by a sea ratio S which is equal to or greater than 25% and equal to or less than 40% (25%≤S≤40%) and a greater sea ratio Ssh which is the sea ratio at a quarter width of the tread from the outside of the tyre when mounted on a vehicle which is 10% or more and 25% or less (10%≤Ssh≤25%).

3. A pneumatic tyre according to claim 2, characterised in that the tread pattern of said tyre is asymmetric with respect to the equatorial plane of the tyre.

**Patentansprüche**

1. Anordnung von Luftreifen (1) an einem Fahrzeug, dadurch **gekennzeichnet,** daß die Luftreifen, die auf das rechte Vorderrad (11a) und das linke Hinterrad (11b) in der Fortschritts- oder Vorwärtsrichtung des Fahrzeuges aufgezogen sind, eine äußerste Gürtellage (4) unter der Lauffläche aufweisen, in welcher sich Corde diagonal zur unteren rechten Seite und in der Fortschrittsrichtung des Fahrzeuges erstrecken, und Luftreifen, die auf dem linken Vorderrad (11b) und dem rechten Hinterrad (12a) in der Vorwärts- oder Fortschrittsrichtung des Fahrzeuges aufgezogen sind, eine äußerste Gürtellage (4) unter der Lauffläche aufweisen, in welcher sich die Corde diagonal zur unteren linken Seite in der Fortschrittsrichtung des Fahrzeuges erstrecken.

2. Luftreifen für die Anordnung von Anspruch 1 mit einer äußersten Gürtellage (4) von Verstärkungscorden, die sich diagonal über den Reifen unter der Lauffläche erstrecken, wobei die Lauffläche ein derartiges Laufflächenprofil aufweist, daß, wenn der Reifen auf eine Meßfelge gemäß JATMA-Standards aufgezogen, auf den Standarddruck aufgepumpt und mit 88 % der maximalen Last belastet ist, dann das Laufflächenprofil durch ein See-Verhältnis S, welches gleich oder größer als 25 % und gleich oder kleiner als 40 % (25 % ≤ S ≤ 40 %) ist, und ein größeres See-Verhältnis Ssh gekennzeichnet ist, welches das See-Verhältnis bei einer viertel Breite der Lauffläche von der Außenseite des Reifens ist, wenn er an einem Fahrzeug angebracht ist, welches 10 % oder mehr und 25 % oder weniger (10 % ≤ Ssh ≤ 25 %) beträgt.

3. Luftreifen nach Anspruch 2, dadurch **gekennzeichnet,** daß das Laufflächenprofil des Reifens unsymmetrisch bezüglich der Äquatorialebene des Reifens ist.

**Revendications**

1. Agencement de bandages pneumatiques (1) sur un véhicule, caractérisé en ce que les bandages pneumatiques montés sur la roue avant droite (11a) et la roue arrière gauche (12b) dans le sens de l'avance ou de la marche avant du véhicule comportent un pli de ceinture situé le plus à l'extérieur (4) sous la bande de roulement dans lequel les fils câblés s'étendent diagonalement vers la partie inférieure de droite dans le sens de la marche avant du véhicule, et des bandages pneumatiques montés sur la roue avant gauche (11b) et la roue arrière droite (12a) dans le sens de l'avance ou de la marche avant du véhicule, ont un pli de ceinture (4) situé le plus à l'extérieur sous la bande de roulement dans lequel les fils câblés s'étendent diagonalement vers la partie inférieure de gauche dans le sens de la marche avant du véhicule.

2. Bandage pneumatique pour l'agencement selon la revendication 1, comportant un pli de ceinture (4) situé le plus à l'extérieur avec des fils câblés d'armement s'étendant diagonalement à travers le pneumatique sous la bande de roulement, la bande de roulement ayant une sculpture telle que, lorsque le pneumatique est monté sur une jante d'étalonnage conforme aux normes JATMA, et qu'il est gonflé sous une pression standard et chargé à 88 % de la charge maximum, la sculpture de bande de roulement est caractérisée par un rapport Sea S égal ou supérieur à 25 % et égal ou inférieur à 40 % (25 % ≤ S ≤ 40 %) et un rapport Sea, Ssh qui est le rapport Sea ramené au quart de la largeur de la bande de roulement comptée depuis le flanc extérieur du pneumatique lorsqu'il est monté sur un véhicule, supérieur ou égal à 10% ou inférieur ou égal à 25% (10% ≤ Ssh ≤ 25%).

3. Bandage pneumatique selon la revendication 2, caractérisé en ce que la sculpture de la bande de roulement dudit pneumatique est asymétrique par rapport au plan équatorial du pneumatique.

FIG. 1

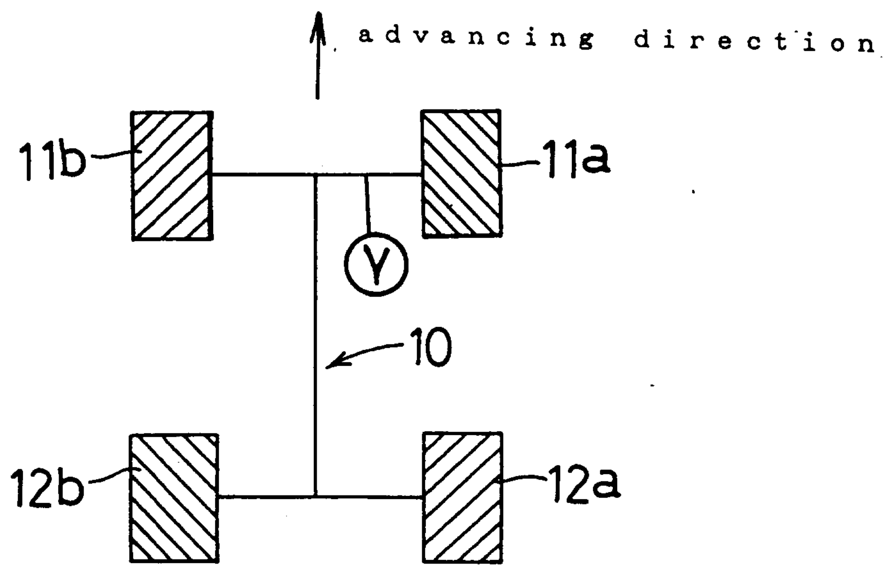
advancing direction
11b
11a
10
12b
12a

FIG. 2

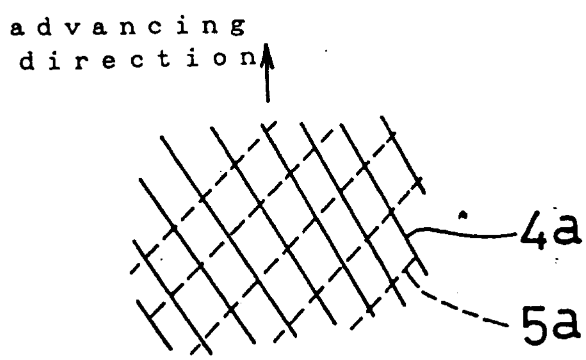
advancing direction
4a
5a

FIG. 3

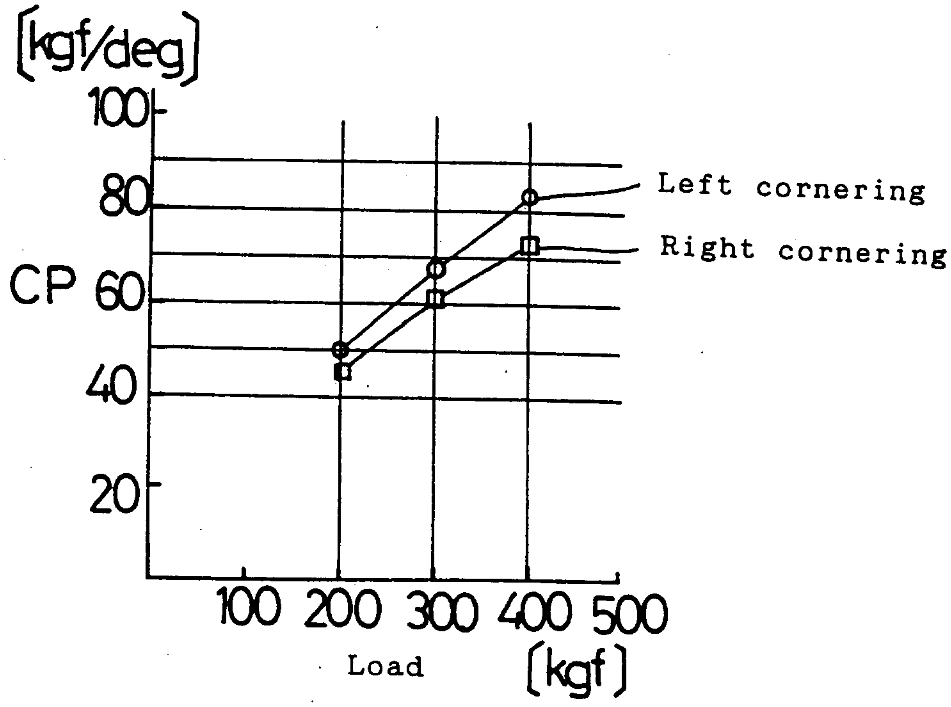
[kgf/deg]
100
80
CP 60
40
20
100 200 300 400 500
Load
[kgf]
Left cornering
Right cornering

FIG. 4

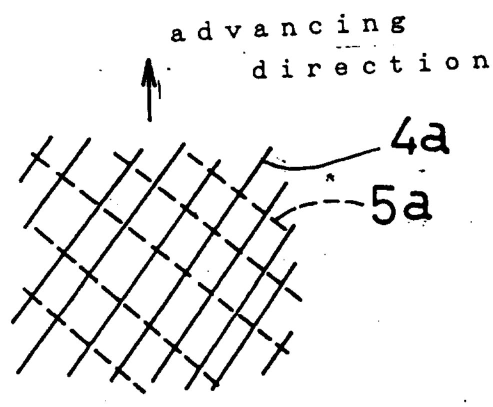
advancing direction
4a
5a

FIG. 5

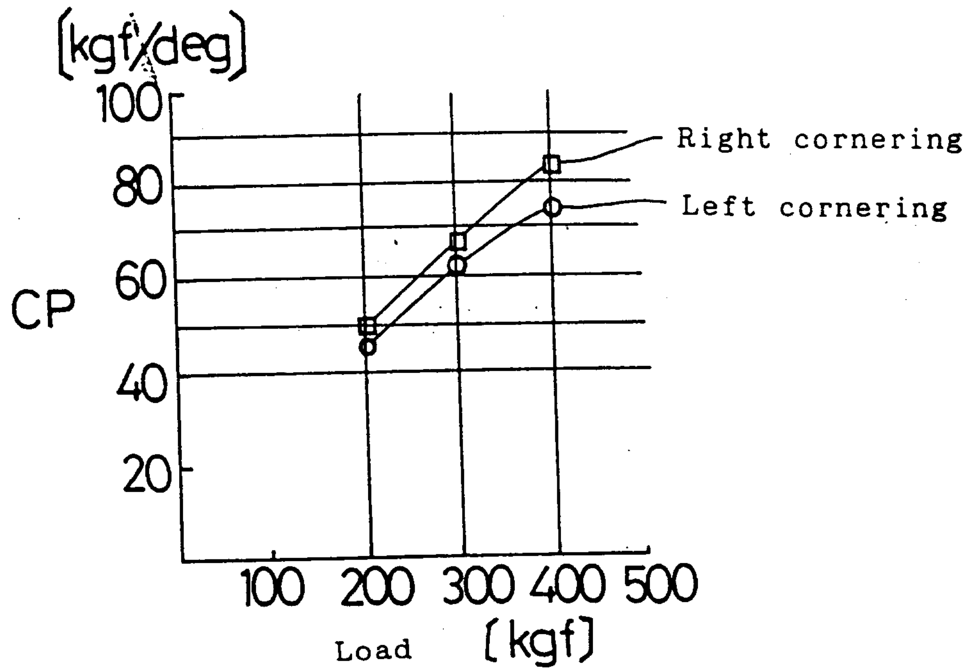
[kgf/deg]
100
80
60
CP
40
20
Right cornering
Left cornering
100 200 300 400 500
Load [kgf]

FIG. 6

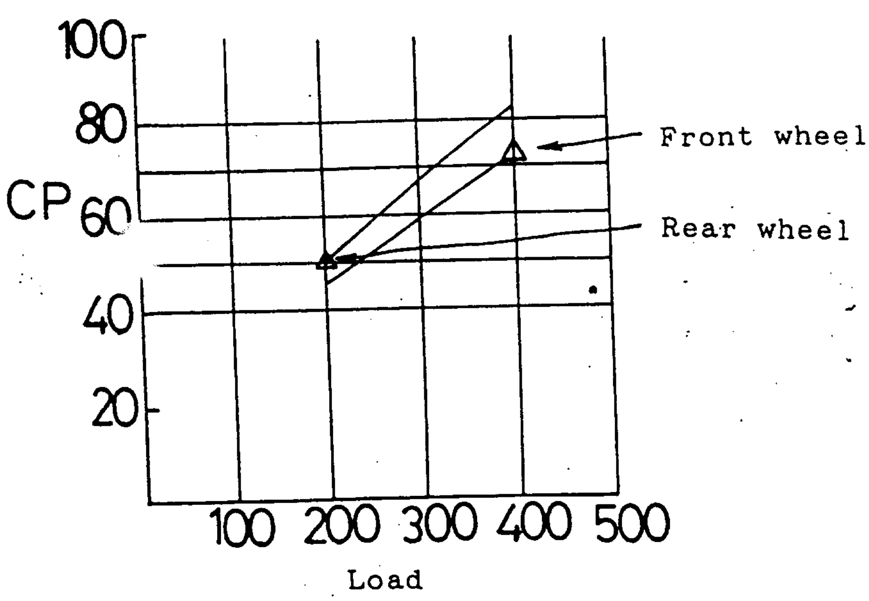
100
80
CP 60
40
20
Front wheel
Rear wheel
100 200 300 400 500
Load

FIG. 7

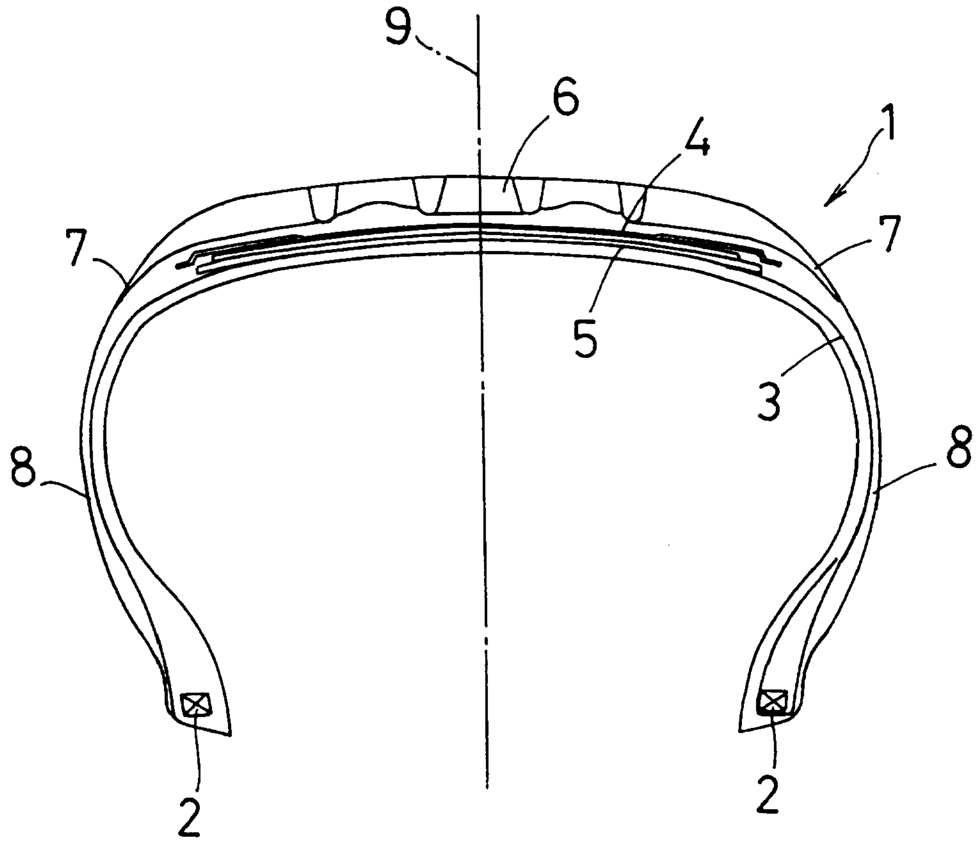

FIG. 8

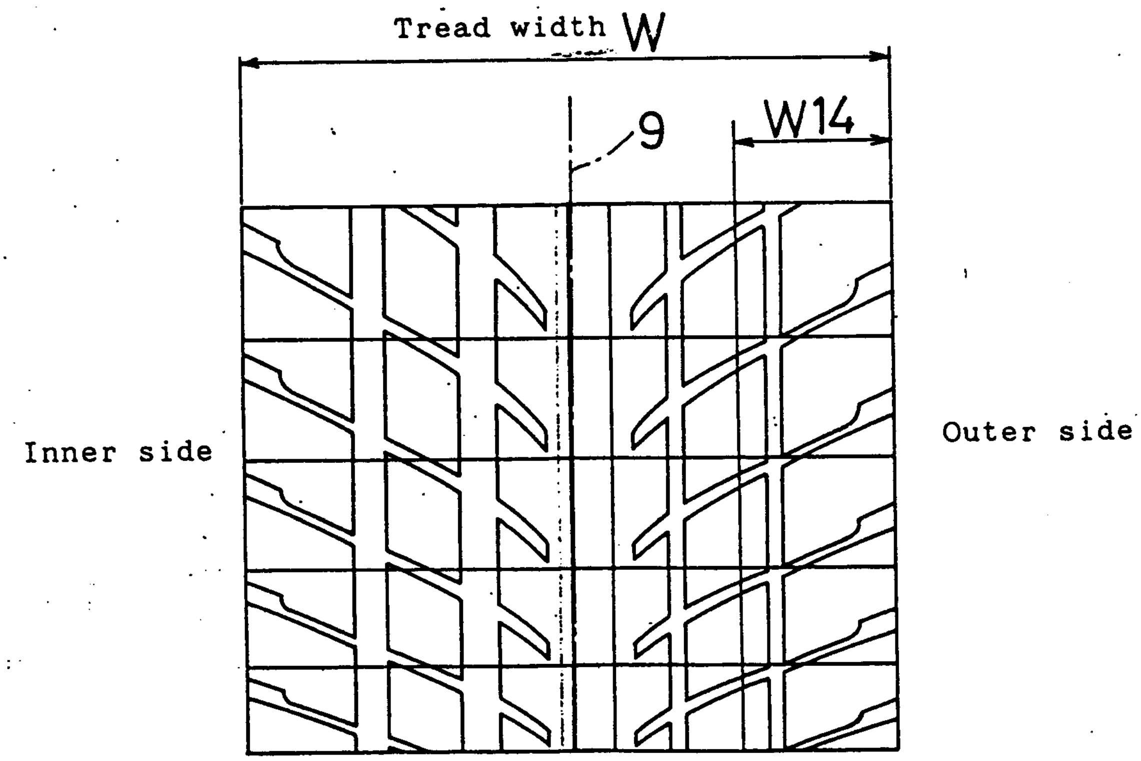


① Second embodiment

FIG. 9 (PRIOR ART)

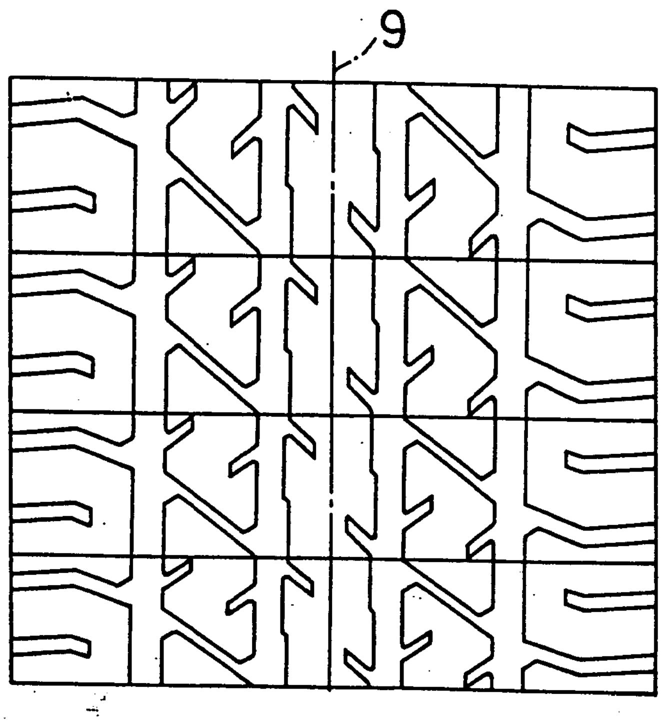


② Conventional tread pattern

FIG. 10

Symmetric pattern